# EUROPEAN PATENT SPECIFICATION

(11) **EP 2 355 226 B1**
(45) Date of publication and mention of the grant of the patent: **02.04.2014**
(21) Application number: 11151303.2
(22) Date of filing: 18.01.2011
(51) Int. Cl.: H01M 10/0525, H01M 10/058, H01M 2/34, H01M 6/50, H01M 2/04, H01M 2/22, H01M 10/42

(54) **Secondary battery and method of manufacturing the same**
Sekundärbatterie und Herstellungsverfahren dafür
Batterie secondaire et son procédé de fabrication

(30) Priority: 19.01.2010 US 296400 P; 13.01.2011 US 201113006360
(43) Date of publication of application: 10.08.2011
(73) Proprietor: Samsung SDI Co., Ltd., Yongin-si, Gyeonggi-do (KR)
(72) Inventor: Kim, Hyeongsin, Gyeonggi-do (KR); Jang, Youngcheol, Gyeonggi-do (KR)
(74) Representative: Walaski, Jan Filip

(56) References cited:
- EP-A1- 2 320 491
- EP-A2- 1 804 318
- JP-A- 2001 325 943
- JP-A- 2004 071 346

## Description

The present invention relates to a secondary battery and a method of fabricating the same.

Generally, battery packs include a rechargeable bare cell and a protection circuit module (PCM) for preventing the bare cell from being overcharged or overdischarged. Lithium ion batteries or lithium polymer batteries are now used as the bare cell. The PCM includes a plurality of circuit devices for preventing the bare cell from being overcharged or overdischarged.

Lithium polymer batteries are divided into completely solid type lithium ion polymer batteries containing no organic electrolyte and lithium ion polymer batteries using a gel type polymer electrolyte containing an organic electrolyte. In the case of lithium ion polymer batteries, leakage of the electrolyte is reduced or does not occur when compared to lithium ion batteries using liquid electrolyte. Thus, lithium ion polymer batteries may use a pouch instead of a metal can as a case. The pouch is formed of a metal foil and an insulating layer.

Embodiments are directed to a secondary battery having a construction that improves access to the various components that make up the protection circuit module (PCM) during the formation of the protection circuit module (PCM), and which improves reliability of a positive temperature coefficient (PTC) device.

JP2004071346 relates to a battery including an overheat protective element for cutting off current at the battery.

According to the invention, there is provided a secondary battery according to claim 1.

According to a first aspect of the invention, there is provided a secondary battery comprising a bare cell having an electrode tab and a protection circuit module coupled to the bare cell, wherein the protection circuit module comprises a circuit board, first and second terminals on a first side of the circuit board that faces the bare cell and a protective device between the first and second terminals, wherein the first terminal has a first portion connected to the electrode tab and a second portion connected to the protective device. The first and second portions of the first terminal are disposed on either side of the electrode tab.

The secondary battery may further comprise an insulating member disposed between the electrode tab and the second portion of the first terminal. The insulating member may extend between the first and second terminals to insulate the protective device from the circuit board.

The second terminal may have a first portion mounted to the circuit board and a second portion connected to the protective device.

The insulating member may comprise a first insulating member that extends between the first and second portions of the second terminal, further comprising a second insulating member between the first and second portions of the second terminal. The thickness of the second insulating member corresponds to the thickness of the protective device.

Each of the first and second terminals may comprise a bendable joining portion joining the respective first and second portions to one another. The joining portion may be arranged to be bent during assembly of the protection circuit module. The joining portion may be narrower than the first and second portions.

The first and second portions of each of the first and second terminals may be substantially coplanar in a first assembly position in which the protective device is connected to the respective second portions, and in a second assembly position may be bent towards one another such that the protective device is located on an underside of the circuit board.

The protective device may comprise a positive temperature coefficient element.

The second terminal may be connected to an external terminal on a second side of the circuit board opposite the first side.

The electrode tab may comprise a first electrode tab, further comprising a second electrode tab connected to a third terminal on the circuit board.

According to a further aspect of the invention, there is provided a method of fabricating a secondary battery that comprises a bare cell having an electrode tab and a protection circuit module coupled to the bare cell, the protection circuit module having a circuit board including first and second terminals mounted to an underside of the circuit board, the method comprising attaching the first terminal to the electrode tab, connecting a protective device between the first and second terminals and folding the first and second terminals to locate the protective device on an underside of the circuit board.

The method may further comprise bending the electrode tab such that the underside of the circuit board is moved to face a top surface of the bare cell.

In the secondary battery according to an embodiment, the first terminal connected to the cell tab of the bare cell and the second terminal connected to the first terminal laterally protrude and extend from the circuit board. Also, the PTC device is disposed between the first terminal and the second terminal. The first terminal and the second terminal are bent to position the PTC device below the circuit board. Therefore, the positional restriction of the PTC device may be reduced, and a space within the PCM may be secured.

In addition, the top surface of the PTC device may be adjacent to that of the bare cell to secure the reliability of the PTC device.

Example embodiments will now be described more fully hereinafter with reference to the accompanying drawings, in which:
FIG. 1A illustrates a perspective view of a secondary battery according to an embodiment;
FIG. 2A illustrates an exploded perspective view of the secondary battery according to an embodiment;
FIG. 3 illustrates an enlarged perspective view of a state in which a bare cell is coupled to a protection circuit module in FIG. 2;
FIG. 4 illustrates a view of a state in which the protection circuit module of FIG. 2 is bent upwards;
FIG. 5 illustrates a perspective view of a state in which the bare cell is coupled to the protection circuit module in FIG. 4;
FIG. 6 illustrates a view of a state in which a positive temperature coefficient device of FIG. 5 is shown in its unfolded position;
FIG. 7 illustrates a flowchart for explaining a method of fabricating a secondary battery according to an embodiment; and
FIGS. 8a to 8f illustrate views for explaining a method of fabricating a secondary battery according to an embodiment.

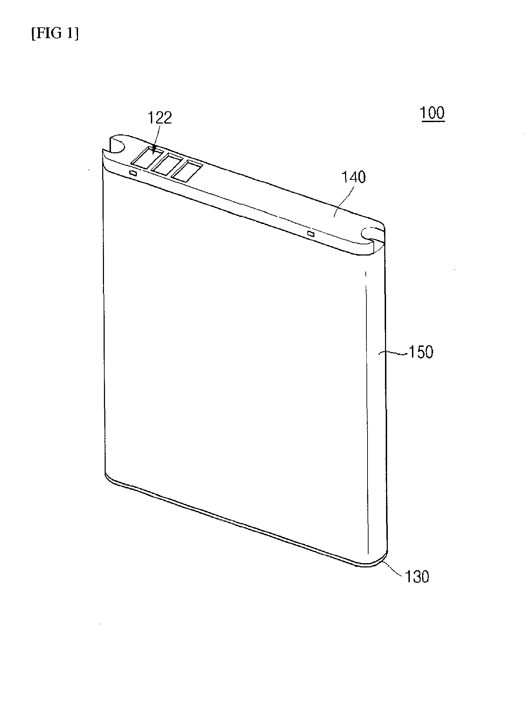

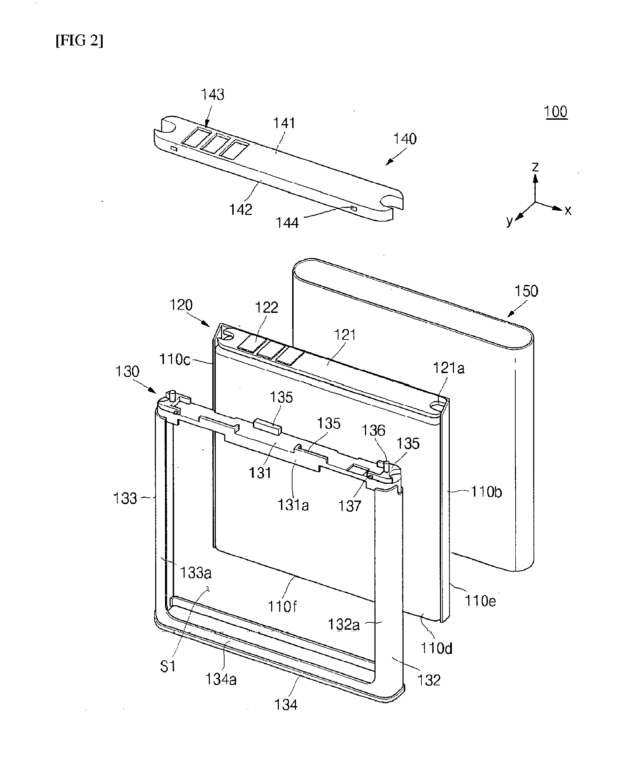

Referring to FIGS. 1 to 6, a secondary battery 100 according to an embodiment includes a bare cell 110, a protection circuit module (PCM) 120, a frame case 130, a top cover 140, and a label 150.

The bare cell 110 may be divided into a can type or pouch type according to a material surrounding an electrode assembly (not shown). In the secondary battery 110 according to an embodiment, the pouch type bare cell 110 will be described as an example.

The bare cell 110 includes the electrode assembly (not shown), a pouch case 111, and first and second cell electrode tabs 112 and 113. The electrode assembly includes a positive electrode, a negative electrode, and a separator disposed between the positive electrode and the negative electrode. The pouch case 111 receives the electrode assembly. The first and second cell tabs 112 and 113 are connected to the positive electrode and the negative electrode of the electrode assembly, respectively. The first and second cell tabs 112 and 113 are exposed to a surface of the pouch case 111. Insulating tapes 114 and 115 for preventing the cell tabs 112 and 113 and the pouch case 111 from being electrically short-circuited together may be further disposed at positions at which the cell tabs 112 and 113 contact the pouch case 111. The bare cell 110 has a top surface 110a, a pair of short side surfaces 110b and 110c, a pair of long side surfaces 110d and 110e, and a bottom surface 110f. The PCM 120 is disposed on the top surface 110a of the bare cell 110. The pair of short side surfaces 110b and 110c and the pair of long side surfaces 110d and 110e are connected to the top surface 110a. The bottom surface 110f faces the top surface 110a and is connected to the side surfaces 110b, 110c, 110d, and 110e. Here, the pair of short side surfaces 110b and 110c represents side surfaces having a relatively narrow width among the side surfaces 110b, 110c, 110d, and 110e connected to the top surface 110a of the bare cell 110. The pair of long side surfaces 110d and 110e represents side surfaces having a relatively wide width among the side surfaces 110b, 110c, 110d, and 110e connected to the top surface 110a of the bare cell 110.

The PCM 120 is disposed on the top surface 110a of the bare cell 110. The PCM 120 is electrically connected to the bare cell 110 to control a charge/discharge state of the bare cell 110. The PCM 120 includes a circuit board 121, an external terminal 122, internal terminals 123 to 125, a positive temperature coefficient (PTC) device 128, and an insulating tape 129. In addition, the PCM 120 may further include a charge/discharge switching device 126 and a control device 127.

The circuit board 121 includes an insulating layer having a plate shape. The external terminal 122 is electrically connected to the internal terminals 123 to 125 through an interconnection pattern (not shown) disposed inside the circuit board 121. The external terminal 122 is disposed on a top surface of the circuit board 121 to electrically connect the circuit board 121 to the external terminal (not shown). Also, the circuit board 121 may have coupling holes 121a at both ends to couple the frame case 130 thereto.

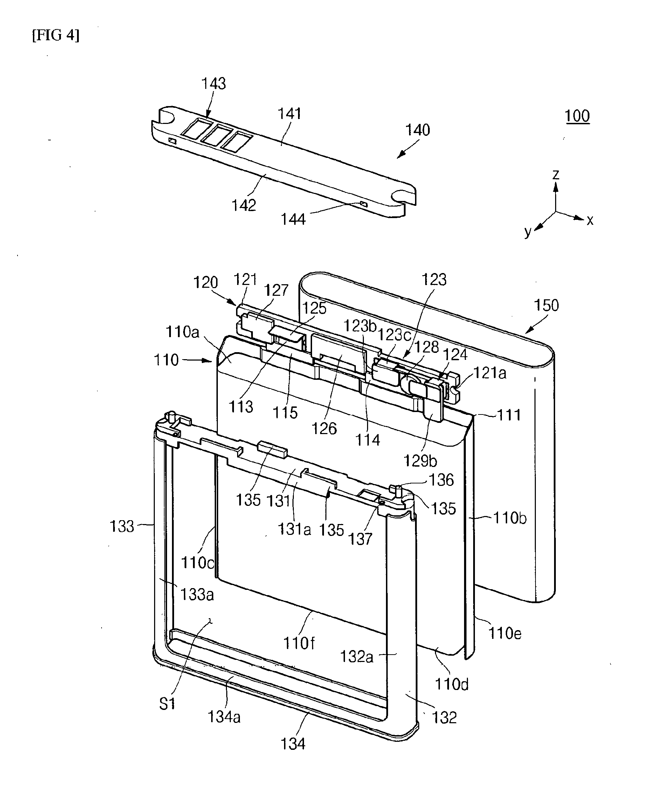

FIG. 4 illustrates a view of a state in which the PCM 120 is disposed in a vertical position (a z-axis direction of FIG. 4) to illustrate a bottom surface of the PCM 120.

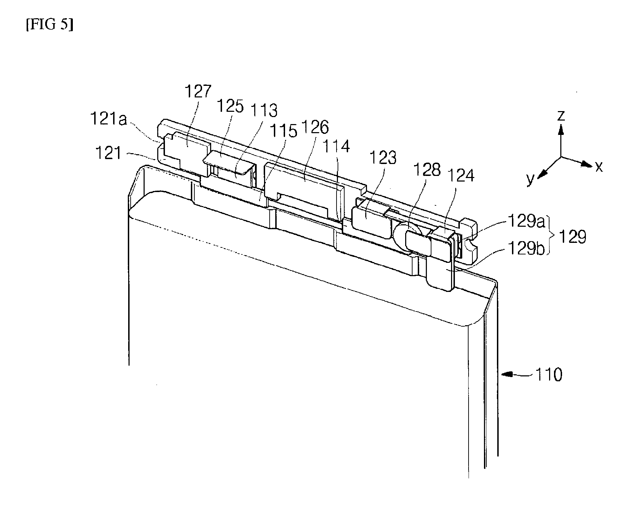

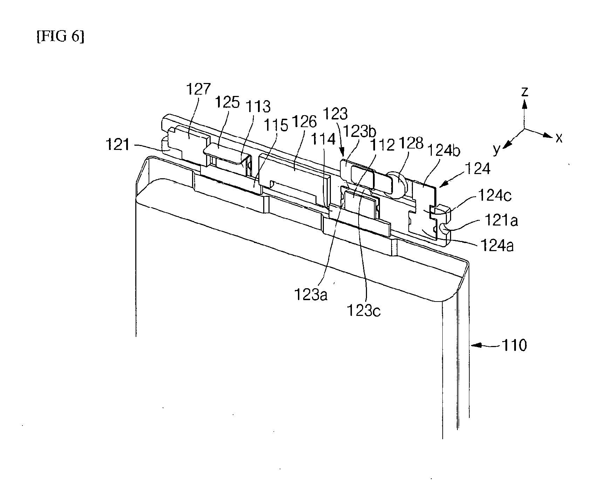

FIG. 5 illustrates a perspective view of a state in which the bare cell 110 is coupled to the PCM 120 in FIG. 4. FIG. 6 illustrates a view of a state in which the PTC device 128 of FIG. 5 is disposed in an unfolded position and shown without an insulating tape 129.

Referring to FIGS. 4 to 6, the internal terminals 123 to 125 are arranged on a lower side, or underside, of the circuit board 121. The internal terminals 123 to 125 may be formed of nickel. The internal terminals 123 to 125 include a first terminal 123, a second terminal 124, and a third terminal 125. The first terminal 123 is connected to the first cell tab 112 of the bare cell 110. The second terminal 124 is connected to the first terminal 123 through the PTC device 128. The third terminal 125 is connected to the second cell tab 113.

The first terminal 123 has a first portion 123a coupled to a bottom surface of the circuit board 121 and to the first cell tab 112 and a second portion 123b opposite the first portion and coupled to one side of the PTC device 128. The first and second portions 123a, 123b are joined by a joining portion 123c which is, for example, narrower than either of the first and second portions. The second terminal 124 has a first portion 124a disposed on the bottom surface of the circuit board 121 and has a second portion 124b coupled to the other side of the PTC device 128. Like the first terminal 123, the second terminal 124 also has a narrower joining portion 124c joining the first and second portions 124a, 124b.

The second portions 123b, 124b of the first terminal 123 and the second terminal 124 are connected to the PTC device 128 when the terminals 123, 124 are in an unfolded state, as shown in Figure 6. In this state, the second terminal 124 may be flat, while the first terminal 123 may be flat or may be slightly bent at the joining portion 123c to enable the connection to the PTC device 128. This configuration may be referred to as substantially coplanar, even when the first and second portions 123a, 123b are offset from one another to the small extent necessary to achieve connection to the PTC device 128. Alternatively, the first and second terminals may be referred to as being in an unfolded state.

To achieve their operative position, the first terminal 123 and the second terminal 124 are bent at their respective bending portions 123c, 124c through about 180° so that the first and second portions 123a, 123b of the first terminal are substantially parallel, for example in an inverted 'U' shape as viewed in Figure 4. The first and second portions 123a, 123b of the first terminal 123 are therefore disposed on either side of the first cell tab 112. Prior to bending, an insulating portion 129 is added, as will be described in more detail below. The circuit board 121 is then folded down so that the circuit board 121 is disposed parallel to the top surface 110a of the bare cell, as will be described in more detail below. After folding, the second portion 123b of the first terminal 123 is disposed below the first portion 123a of the first terminal 123. As a result, the PTC device 128 is easily assembled and compactly provided between the circuit board 121 and the bare cell 110. A voltage of the first cell tab 112 applied to the first terminal 123 is transmitted to the second terminal through the PTC device 128 and transmitted to the external terminal 122 through an interconnection of the circuit board 121.

The third terminal 125 surrounds the second cell tab 113 in front and rear directions. The third terminal 125 may be coupled to the third cell tab 113 using welding.

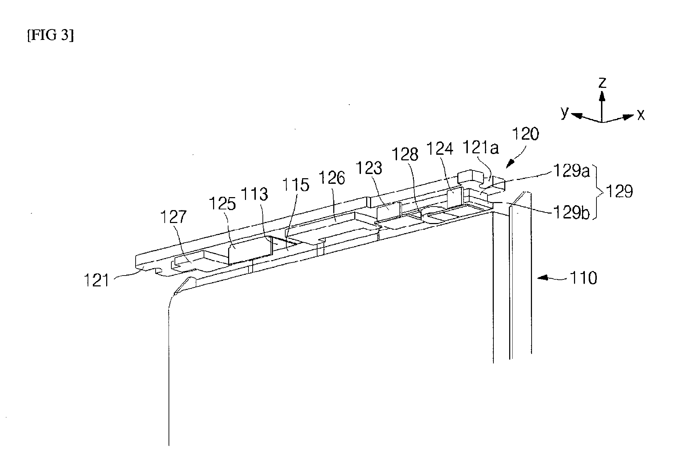

The charge/discharge switching device 126 and the control device 127 are disposed on the bottom surface (the y-axis direction of FIG. 3) of the circuit board 121. The control device 127 may include an integrated IC. The control device 127 detects a charge voltage, a discharge voltage, and current of the bare cell 110. Also, the charge/discharge switching device 126 intercepts current applied to the bare cell 110 when an overcharge, overdischarge, or overcurrent of the bare cell 110 is detected.

As described above, the PTC device 128 is disposed below the circuit board 121. The PTC device 128 is coupled between the first terminal 123 and the second terminal 124. The PTC device 128 intercepts current when a temperature of the bare cell 110 is higher than an allowable temperature to prevent the bare cell 110 from being degraded by excess heat. The PTC device 128 may include a chip PTC thermistor, but is not limited thereto. Since the first terminal 123 and the second terminal 124 are bent in a state where the first terminal 123 and the second terminal 124 are coupled to the PTC device 128, the PTC device 128 faces a top surface of the bare cell 110. Since the PTC device 128 is disposed adjacent to the top surface of the bare cell 110, heat may be easily transmitted to the PTC device 128 through the bare cell 110. Thus, reliability of the PTC device 128 may be secured due to the bending of the first terminal 123 and the second terminal 124.

Insulating tape 129 is disposed between the bent first and second terminals 123 and 124. The insulating tape 129 includes a first insulating tape 129a and a second insulating tape 129b. The first insulating tape 129a extends from the first terminal 123 to the second terminal 124 and is disposed in a transverse direction (an x-axis direction of FIG. 4). The second insulating tape 129b is disposed along a length direction (a -z-axis direction of FIG. 4) of the second terminal 124. Here, the second insulating tape 129b has a thickness corresponding to that of the PTC device 128 to support a height difference between the first terminal 123 and the second terminal 124 that are coupled to both ends of the PTC device 128. That is, the first insulating tape 129a and the second insulating tape 129b are disposed inside the bent first and second terminals 123 and 124 when the first and second terminals 123 and 124 are bent to support the bent configurations of the first and second terminals 123 and 124. Also, the first insulating tape 129a and the second insulating tape 129b electrically insulate a bottom surface of the PTC device 128 from the circuit board 121.

The frame case 130 is disposed between the bare cell 110 and the PCM 120. The frame case 130 covers the top surface 110a, the bottom surface 110f, and the pair of short side surfaces 110b and 110c of the bare cell 110. Also, the frame case 130 covers lateral edges of the pair of long side surfaces 110d and 110e of the bare cell 110. As a result, the frame case 130 has a receiving space S1 of the bare cell 110.

Specifically, the frame case 130 may include planar parts 131, 132, 133, and 134 and extension parts 131a, 132a, 133a, and 134a. The planar parts 131, 132, 133, and 134 cover the top surface 110a, the pair of short side surfaces 110b and 110c, and the bottom surface 110f of the bare cell 110, respectively. The extension parts 131a, 132a, 133a, and 134a are bent from the planar parts 131, 132, 133, and 134 and extend toward the bare cell 110 to cover edges of the bare cell 110.

The frame case 130 may include a support 135, a coupling protrusion 136, and a rib 137. The support 135 vertically protrudes from the planar part 131. The coupling protrusion 136 vertically protrudes from the support 135. The rib 137 laterally protrudes from the support 135. The support 135 protrudes from the planar part 131 to support the PCM 120 to be coupled to an upper portion thereof. The coupling protrusion 136 protrudes from the support 135 and is coupled to a coupling hole 121a of the circuit board 121. Also, the rib 137 is coupled to a rib coupling hole 144 of a top cover 140 coupled to an upper portion of the PCM 120. The top cover 140 is coupled to an upper portion of the bare cell 110 to receive the PCM 120 therein. The top cover includes a cover plate 141 and a sidewall 142.

The cover plate 141 may have a shape approximately similar to that of the circuit board 121. A through hole 143 is defined in a region corresponding to the external terminal 122 of the PCM 120. The through hole 143 may expose the external terminal 122 to electrically connect the secondary battery 100 to an external device (not shown).

The sidewall 142 extends from the cover plate 141 toward the PCM 120 to receive the PCM 120. Also, the sidewall 142 has the rib coupling hole 144 in a region corresponding to the rib 137 of the frame case 130. When the rib 137 and the rib coupling hole 144 are coupled to couple the frame case 130 to the top cover 140. The label 150 is surroundingly attached to the side surfaces 110b, 110c, 110d, and 110e of the bare cell 110. The label 150 covers a lower portion of the top cover 140. The label 150 may improve coupling forces between the bare cell 110, the frame case 130, and the top cover 140.

As described above, in the secondary battery 100 according to an embodiment, the first terminal 123 connected to the first cell tab 112 of the battery cell 110 and the second terminal 124 connected to the first terminal 123 laterally protrude and extend from the circuit board 121. Also, the PTC device 128 is disposed between the first terminal 123 and the second terminal 124. The first terminal 123 and the second terminal 124 are bent to allow the PTC device 128 to be disposed above a position at which the first cell tab 112 is coupled to the first terminal 123. Therefore, the positional restriction of the PTC device 128 may be reduced within the PCM 120. In addition, a top surface of the PTC device 128 may be adjacent to the top surface of the battery cell 110 to secure the reliability of the PTC device 128.

Hereinafter, a method of fabricating a secondary battery according to an embodiment will be described.

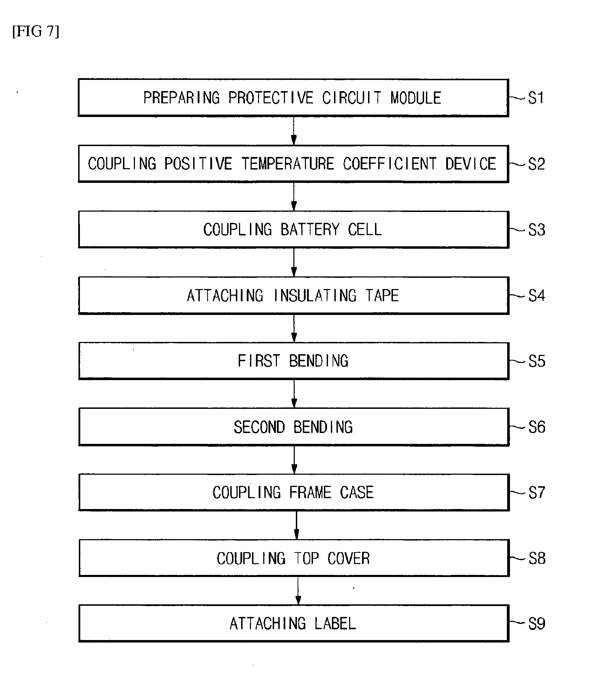

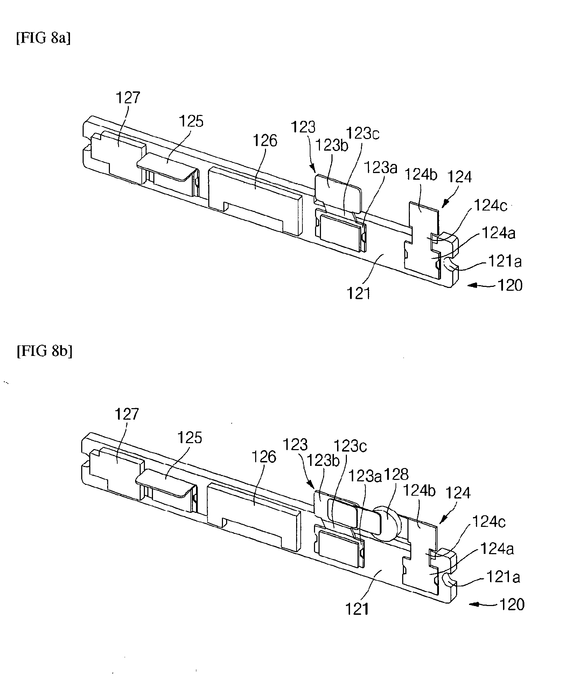

FIG. 7 illustrates a flowchart for explaining a method of fabricating a secondary battery according to an embodiment. FIGS. 8a to 8f illustrate views for explaining a method of fabricating a secondary battery according to an embodiment.

Referring to FIG. 7, a method of fabricating a secondary battery according to an embodiment includes a protection circuit module (PCM) preparation process S1, a positive temperature coefficient (PTC) device coupling process S2, a bare cell coupling process S3, an insulating tape attachment process S4, a first bending process S5, and a second bending process S6. After the second bending process S6 is performed, a frame case coupling process S7, a top cover coupling process S8, and a label attachment process S9 may be performed. Hereinafter, the processes of FIG. 7 will be described with reference to FIGS. 8a to 8f.

Referring to FIGS. 7 and 8a, the PCM preparation process S1 represents a process in which a PCM including a first terminal 123, a second terminal 124, a third terminal 125, a charge/discharge switching device 126, and a control device 127 on a bottom surface of a circuit board 121 is prepared. Here, the first terminal 123 and the second terminal 124 have first portions disposed below the circuit board 121 and second portions laterally extending and protruding from the circuit board 121. Also, the first terminal 123 and the second terminal 124 may have a height difference corresponding to a thickness of a PTC device 128 to be coupled later.

Referring to FIGS. 7 and 8b, the PTC device coupling process S2 represents a process in which the PTC device 128 is coupled to the first terminal 123 and the second terminal 124. The PTC device has one end coupled to a second portion 123b of the first terminal 123 and the other end coupled to a second portion 124b of the second terminal 124. Also, the coupling process may be performed using a typical welding method. The first terminal 123 is therefore electrically connected to the second terminal 124 through the PTC device 128.

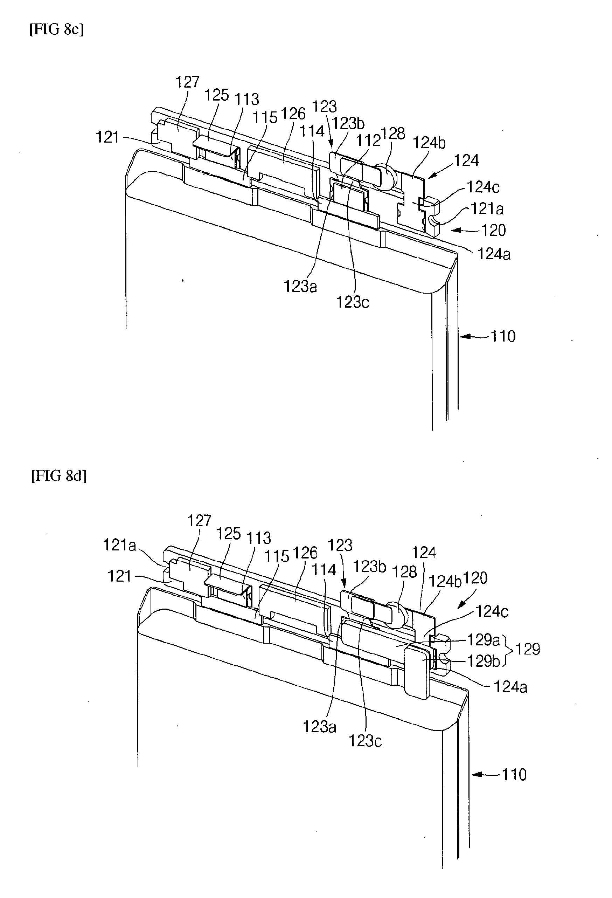

Referring to FIGS. 7 and 8c, the bare cell coupling process S3 represents a process in which a first cell tab 112 and a second cell tab 113 of a bare cell 110 are coupled to the first terminal 123 and the third terminal 125 of the PCM 120, respectively. The coupling process may be performed using the typical welding method. Here, a welding process may be performed in a state where a first portion 123a of the first terminal 123 is disposed against the first cell tab 112 to couple the first terminal 123 to the first cell tab 112. Also, a welding process may be performed in a state where the third terminal 125 surrounds the second cell tab 113 to couple the third terminal to the second cell tab 113.

Referring to FIGS. 7 and 8d, the insulating tape attachment process S4 represents a process in which an insulating tape 129 is attached to the first terminal 123 and the second terminal 124. The insulating tape 129 includes a first insulating tape 129a placed over the first portion 123a of the first terminal and connected from the first terminal 123 to the first portion 124a of the second terminal 124 and a second insulating tape 129b formed along a length direction of the second terminal 124 downwards from the first portion 124a. In the insulating tape attachment process S4, the first insulating tape 129a covers a portion at which the first cell tab 112 is welded to the first terminal 123 and extends up to the second terminal 124, thereby being attached thereto. The second insulating tape 129b is vertically attached to the first insulating tape 129a along the length direction of the second terminal 124. Here, the second insulating tape 129b has a thickness corresponding to that of the PTC device 128.

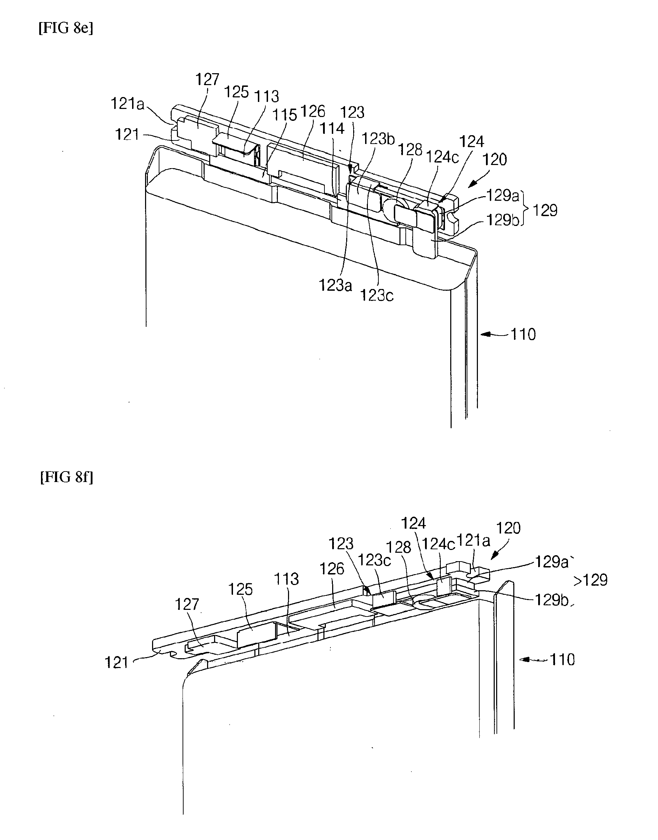

Referring to FIGS. 7 and 8e, the first bending process S5 represents a process in which the second portions 123b, 124b of the first terminal 123 and the second terminal 124 are bent to allow a bottom surface of the PTC device 128 to face a bottom surface of the circuit board 121. That is, the first terminal 123 and the second terminal 124 are bent through about 180° at their respective joining portions 123c, 124c. As a result, the bottom surface of the PTC device 128 contacts the insulating tape 129a and faces the bottom surface of the circuit board 121.

Referring to FIGS. 7 and 8f, the second bending process S6 represents a process in which the cell tabs 112 and 113 are bent. The cell tabs 112 and 113 are bent so that a top surface of the PCM 120 is parallel to the top surface 110a of the bare cell 110. That is, the cell tabs 112 and 113 are bent through about 90°. A welded region between the first cell tab 112 and the first terminal 123 vertically overlaps a welded region between the first terminal 123 and the PTC device 128. Thus, as described above, a compact arrangement can be achieved while allowing easy access to and attachment of the PTC device 128 within the PCM 120 during manufacture.

Also, since the cell tabs 112 and 113 are bent, a top surface of the PTC device 128 connected to the first terminal 123 and the second terminal 124 is adjacent to that of the bare cell 110. Thus, as described above, operating reliability of the PTC device 128 may be improved.

Referring to FIG. 7, the frame case coupling process S7 represents a process in which the frame case 130 is coupled between the bare cell 110 and the PCM 120. The frame case 130 is coupled from a front surface of the bare cell 110. As a result, the bare cell 110 is inserted and seated inside the frame case 130. A support 135 supports the circuit board 121 of the PCM 120, and a protrusion 136 is coupled to a coupling hole 121a of the circuit board 121 to fix the frame case 130.

The top cover coupling process S8 represents a process in which a top cover 140 is coupled to an upper portion of the frame case 130. A rib 137 of the frame case 130 may be coupled to a rib coupling hole 144 to fix the top cover 140. An external terminal 122 of the PCM 120 may be exposed through a through hole 143 of the top cover 140.

The label attachment process S9 represents a process in which a label 150 is attached to an outer surface of the frame case 130. The label 150 is attached to the outside of the frame case 130 to surround side surfaces of the bare cell 110 and a lower portion of the top cover 140. As a result, the bare cell 110, the PCM 120, the frame case 130, and the top cover 140 may be firmly coupled.

The secondary battery 100 according to an embodiment may be manufactured through the above-described processes. In the secondary battery 100 according to an embodiment, since the two bending processes S5 and S6 are performed to position the PTC device 128 at a position at which the first cell tab 112 is coupled to the first terminal 123 within the PCM 120, the PTC device 128 may be easily connected and positioned. In addition, the top surface of the PTC device 128 may be adjacent to that of battery cell 110 to secure the reliability of the PTC device 128.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A secondary battery comprising:
a bare cell (110) having an electrode tab (112, 113); and
a protection circuit module (120) coupled to the bare cell, wherein the protection circuit module comprises:
a circuit board (121);
first and second terminals (123, 124) on a first side of the circuit board that faces the bare cell; and
a protective device (128) between the first and second terminals;
wherein the first terminal (123) has a first portion (123a) connected to the electrode tab (112, 113) and a second portion (123b) connected to the protective device (128); and
wherein the first and second portions (123a, 123b) of the first terminal (123) are disposed on either side of the electrode tab (112, 113).

2. The secondary battery of claim 1, further comprising an insulating member (129a) disposed between the electrode tab and the second portion (123b) of the first terminal.

3. The secondary battery of claim 2, wherein the insulating member (129a) extends between the first and second terminals (123, 124) to insulate the protective device (128) from the circuit board.

4. The secondary battery of any one of the preceding claims, wherein the second terminal (124) has a first portion (124a) mounted to the circuit board and a second portion (124b) connected to the protective device (128).

5. The secondary battery of claim 4, when dependent on claim 3, wherein the insulating member comprises a first insulating member (129a) that extends between the first and second portions (124a, 124b) of the second terminal, further comprising a second insulating member (129b) between the first and second portions of the second terminal (124).

6. The secondary battery of claim 5, wherein the thickness of the second insulating member (129b) corresponds to the thickness of the protective device (128).

7. The secondary battery of claim 4, 5 or 6, wherein each of the first and second terminals (123, 124) comprises a bendable joining portion (123c, 124c) joining the respective first and second portions to one another.

8. The secondary battery of claim 7, wherein the joining portion (123c, 124c) is narrower than the first and second portions.

9. The secondary battery of claim 7 or 8, wherein the first and second portions (123a, 123b; 124a, 124b) of each of the first and second terminals are substantially coplanar in a first assembly position in which the protective device is connected to the respective second portions (123b, 124b), and in a second assembly position are bent towards one another such that the protective device is located on an underside of the circuit board.

10. The secondary battery of any one of the preceding claims, wherein the protective device comprises a positive temperature coefficient element.

11. The secondary battery of any one of the preceding claims, wherein the second terminal (124) is connected to an external terminal (122) on a second side of the circuit board opposite the first side.

12. The secondary battery of any one of the preceding claims, wherein the electrode tab comprises a first electrode tab (112), further comprising a second electrode tab (113) connected to a third terminal (125) on the circuit board.

13. A method of fabricating a secondary battery according to any one of the preceding claims that comprises a bare cell (110) having an electrode tab (112, 113) and a protection circuit module (120) coupled to the bare cell, the protection circuit module having a circuit board (121) including first and second terminals (123, 124) mounted to an underside of the circuit board, the method comprising:
attaching the first terminal (123) to the electrode tab;
connecting a protective device (128) between the first and second terminals; and
folding the first and second terminals (123, 124) to locate the protective device on an underside of the circuit board (121).

14. The method of claim 13, further comprising bending the electrode tab such that the underside of the circuit board (121) is moved to face a top surface of the bare cell.

## Patentansprüche

1. Sekundärbatterie, umfassend:
eine Rohzelle (110) mit einem Elektrodenstreifen (112, 113) und
ein Schutzschaltungsmodul (120), das mit der Rohzelle gekoppelt ist, wobei das Schutzschaltungsmodul Folgendes umfasst:
eine Platine (121);
einen ersten und einen zweiten Anschluss (123, 124) auf einer ersten, der Rohzelle zugewandten Seite der Platine
und eine Schutzvorrichtung (128) zwischen dem ersten und dem zweiten Anschluss;
wobei der erste Anschluss (123) einen mit dem Elektrodenstreifen (112, 113) verbundenen ersten Abschnitt (123a) und einen mit der Schutzvorrichtung (128) verbundenen zweiten Abschnitt (123b) aufweist und
wobei der erste und der zweite Abschnitt (123a, 123b) des ersten Anschlusses (123) beidseits des Elektrodenstreifens (112, 113) angeordnet sind.

2. Sekundärbatterie nach Anspruch 1, ferner umfassend ein Isolationsglied (129a), das zwischen dem Elektrodenstreifen und dem zweiten Abschnitt (123b) des ersten Anschlusses angeordnet ist.

3. Sekundärbatterie nach Anspruch 2, wobei sich das Isolationsglied (129a) zwischen dem ersten und dem zweiten Anschluss (123, 124) erstreckt, um die Schutzvorrichtung (128) von der Platine zu isolieren.

4. Sekundärbatterie nach einem der vorangehenden Ansprüche, wobei der zweite Anschluss (124) einen an der Platine befestigten ersten Abschnitt (124a) und einen mit der Schutzvorrichtung (128) verbundenen zweiten Abschnitt (124b) aufweist.

5. Sekundärbatterie nach Anspruch 4, soweit rückbezogen auf Anspruch 3, wobei das Isolationsglied ein erstes Isolationsglied (129a) umfasst, das sich zwischen dem ersten und dem zweiten Abschnitt (124a, 124b) des zweite Anschlusses erstreckt, ferner umfassend ein zweites Isolationsglied (129b) zwischen dem ersten und dem zweiten Abschnitt des zweiten Anschlusses (124).

6. Sekundärbatterie nach Anspruch 5, wobei die Dicke des zweiten Isolationsglieds (129b) der Dicke der Schutzvorrichtung (128) entspricht.

7. Sekundärbatterie nach Anspruch 4, 5 oder 6, wobei jeder erste und zweite Anschluss (123, 124) einen biegbaren Verbindungsabschnitt (123c, 124c) umfasst, der jeweils den ersten und den zweiten Abschnitt miteinander verbindet.

8. Sekundärbatterie nach Anspruch 7, wobei der Verbindungsabschnitt (123c, 124c) schmaler als der ersten und der zweite Abschnitt ist.

9. Sekundärbatterie nach Anspruch 7 oder 8, wobei der erste und der zweite Abschnitt (123a, 123b; 124a, 124b) jedes ersten und zweiten Anschlusses in einer ersten Montageposition, in der die Schutzvorrichtung mit den jeweiligen zweiten Abschnitten (123b, 124b) verbunden ist, im Wesentlichen koplanar sind und in einer zweiten Montageposition zueinander gebogen sind, sodass die Schutzvorrichtung an einer Unterseite der Platine angeordnet ist.

10. Sekundärbatterie nach einem der vorangehenden Ansprüche, wobei die Schutzvorrichtung ein Bauteil mit positivem Temperaturkoeffizienten umfasst.

11. Sekundärbatterie nach einem der vorangehenden Ansprüche, wobei der zweite Anschluss (124) auf einer zweiten Seite der Platine gegenüber der ersten Seite mit einem externen Anschluss (122) verbunden ist.

12. Sekundärbatterie nach einem der vorangehenden Ansprüche, wobei der Elektrodenstreifen einen ersten Elektrodenstreifen (112) umfasst, ferner umfassend einen zweiten Elektrodenstreifen (113), der mit einem dritten Anschluss (125) an der Platine verbunden ist.

13. Verfahren zur Herstellung einer Sekundärbatterie nach einem der vorangehenden Ansprüche, umfassend eine Rohzelle (110) mit einem Elektrodenstreifen (112, 113) und einem mit der Rohzelle gekoppelten Schutzschaltungsmodul (120), wobei das Schutzschaltungsmodul eine Platine (121) aufweist, die einen ersten und einen zweiten Anschluss (123, 124) beinhaltet, welche an einer Unterseite der Platine befestigt sind, wobei das Verfahren Folgendes umfasst:
Befestigen des ersten Anschlusses (123) am Elektrodenstreifen;
Verbinden einer Schutzvorrichtung (128) zwischen dem ersten und dem zweiten Anschluss; und
Zusammenklappen des ersten und des zweiten Anschlusses (123, 124), um die Schutzvorrichtung an einer Unterseite der Platine (121) anzuordnen.

14. Verfahren nach Anspruch 13, ferner umfassend das Biegen des Elektrodenstreifens, sodass die Unterseite der Platine (121) so bewegt wird, dass sie einer oberen Fläche der Rohzelle gegenüberliegt.

## Revendications

1. Batterie secondaire comprenant :
une pile nue (110) ayant une languette d'électrode (112, 113) ; et
un module de circuit de protection (120) couplé à la pile nue, dans lequel le module de circuit de protection comprend :
une carte de circuit imprimé (121) ;
des première et deuxième bornes (123, 124) sur un premier côté de la carte de circuit imprimé qui fait face à la pile nue ; et
un dispositif de protection (128) entre les première et deuxième bornes ;
dans laquelle la première borne (123) présente une première partie (123a) reliée à la languette d'électrode (112, 113) et une deuxième partie (123b) reliée au dispositif de protection (128) ; et
dans laquelle les première et deuxième parties (123a, 123b) de la première borne (123) sont disposées de chaque côté de la languette d'électrode (112, 113).

2. Batterie secondaire de la revendication 1, comprenant en outre un élément isolant (129a) disposé entre la languette d'électrode et la deuxième partie (123b) de la première borne.

3. Batterie secondaire de la revendication 2, dans laquelle l'élément isolant (129a) s'étend entre les première et deuxième bornes (123, 124) pour isoler le dispositif de protection (128) de la carte de circuit imprimé.

4. Batterie secondaire de l'une quelconque des revendications précédentes, dans laquelle la deuxième borne (124) présente une première partie (124a) montée sur la carte de circuit imprimé et une deuxième partie (124b) reliée au dispositif de protection (128).

5. Batterie secondaire de la revendication 4, lorsqu'elle dépend de la revendication 3, dans laquelle l'élément isolant comprend un premier élément isolant (129a) qui s'étend entre les première et deuxième parties (124a, 124b) de la deuxième borne, comprenant en outre un deuxième élément isolant (129b) entre les première et deuxième parties de la deuxième borne (124).

6. Batterie secondaire de la revendication 5, dans laquelle l'épaisseur du deuxième élément isolant (129b) correspond à l'épaisseur du dispositif de protection (128).

7. Batterie secondaire de la revendication 4, 5 ou 6, dans laquelle chacune des première et deuxième bornes (123, 124) comprend une partie de jonction pliable (123c, 124c) joignant les première et deuxième parties respectives l'une à l'autre.

8. Batterie secondaire de la revendication 7, dans laquelle la partie de jonction (123c, 124c) est plus étroite que les première et deuxième parties.

9. Batterie secondaire de la revendication 7 ou 8, dans laquelle les premières et deuxièmes parties (123a, 123b ; 124a, 124b) de chacune des première et deuxième bornes sont essentiellement coplanaires dans une première position d'assemblage dans laquelle le dispositif de protection est relié aux deuxièmes parties respectives (123b, 124b), et dans une deuxième position d'assemblage elles sont pliées l'une vers l'autre de sorte que le dispositif de protection soit situé sur une face inférieure de la carte de circuit imprimé.

10. Batterie secondaire de l'une quelconque des revendications précédentes, dans laquelle le dispositif de protection comprend un élément à coefficient de température positif.

11. Batterie secondaire de l'une quelconque des revendications précédentes, dans laquelle la deuxième borne (124) est reliée à une borne extérieure (122) sur un deuxième côté de la carte de circuit imprimé à l'opposé du premier côté.

12. Batterie secondaire de l'une quelconque des revendications précédentes, dans laquelle la languette d'électrode comprend une première languette d'électrode (112), comprenant en outre une deuxième languette d'électrode (113) reliée à une troisième borne (125) sur la carte de circuit imprimé.

13. Procédé de fabrication d'une batterie secondaire selon l'une quelconque des revendications précédentes qui comprend une pile nue (110) ayant une languette d'électrode (112, 113) et un module de circuit de protection (120) couplé à la pile nue, le module de circuit de protection ayant une carte de circuit imprimé (121) comportant des première et deuxième bornes (123, 124) montées sur une face inférieure de la carte de circuit imprimé, le procédé comprenant les étapes consistant à :
fixer la première borne (123) à la languette d'électrode ;
relier un dispositif de protection (128) entre les première et deuxième bornes ;
et
replier les première et deuxième bornes (123, 124) afin de positionner le dispositif de protection sur une face inférieure de la carte de circuit imprimé (121).

14. Procédé de la revendication 13, comprenant en outre le fait de plier la languette d'électrode de sorte que la face inférieure de la carte de circuit imprimé (121) soit déplacée de manière à faire face à une surface supérieure de la pile nue.
